# EUROPEAN PATENT SPECIFICATION

(11) **EP 1 568 947 B1**
(45) Date of publication and mention of the grant of the patent: **09.05.2007**
(21) Application number: 05075229.4
(22) Date of filing: 31.01.2005
(51) Int. Cl.: F24F 11/047, F24F 13/18

(54) **Device for regulating the airflow in a ventilation device**
Vorrichtung zur Regelung der Luftströmung einer Belüftungsanlage
Dispositif pour la régulation du débit d'air d'un dispositif de ventilation

(30) Priority: 27.02.2004 NL 1025600
(43) Date of publication of application: 31.08.2005
(73) Proprietor: Renson Ventilation NV, 8790 Waregem (BE); Renson, Paul, 8790 Waregem (BE)
(72) Inventor: Lernout, Hans, 8700 Tielt (BE); Demuynck, Hiloné, 8790 Waregem (BE)
(74) Representative: Ostyn, Frans

(56) References cited:
- EP-A- 1 063 384
- BE-A- 1 011 024
- NL-C- 1 006 698

## Description

The invention relates to a device for regulating the airflow in a ventilation device, comprising an air duct having a movable and autonomously operating valve and which automatically adjusts the airflow opening with relation to the pressure difference between the inlet and the outlet of the air duct.

By an autonomously operating valve is meant a valve that is not controlled by means of a sensor or a motor.

Pressure differences among building components, including ventilation provisions, change continuously because of varying temperature differences, wind speeds and directions as well as usages of the building (opening of doors and windows, use of ventilation devices). In standard ventilation devices, this leads to a continuously changing airflow rate. Specific ventilation devices are provided with an automatically adjustment of the airflow opening (flow cross-profile), and consequently also the airflow rate with relation to the pressure difference over the ventilation grille (the ventilation device). They are most often referred to as self-regulating. By self-regulating valve is meant hereafter a valve that automatically changes the flow cross-profile of a ventilation device upon changes of the pressure difference over the ventilation device.

Beyond a certain pressure difference over the ventilation device, the self-regulating valve ensures a more or less constant airflow rate when the pressure difference rises. Because of different standards or laws, the nominal pressure difference beyond which the airflow rate must be kept constant to regard the ventilation device as self-regulating differs from country to country; For instance, in The Netherlands this must take place beyond 1 Pa, in Belgium beyond 2 Pa. In The Netherlands, the Building Act requires that, beyond 1 Pa, the airflow rate through a self-regulating ventilation grille may not differ by more than 20% from the nominal flow rate and this for a pressure range between 1 and 25 Pa. In Belgium, a similar rule for nominal airflow rate applies, but from 2 Pa onward, and additionally, a distinction is made between classes with a certain degree of regulability with relation to the pressure difference. With the exception of the different value for nominal airflow rate, the strictest class handled in Belgium corresponds with the requirement in The Netherlands.

A distinction can be made between self-regulating valves (which automatically adjust the airflow opening in the air duct with relation to the pressure difference between the inlet and outlet of the air duct) controlled by means of an actuator or a motor or controlled without use of an actuator or motor. This invention relates to a valve of the above kind that operates without use of an actuator or motor (autonomously operating valve). This means that the valve serves as both regulator and sensor. The presently existing ventilation devices provided with valves that automatically adjust the airflow opening in the air duct with relation to the pressure difference between the inlet and the outlet of the air duct and not controlled via an extra actuator and pressure sensor do not comply with the strictest requirements for regulability with relation to pressure difference.

In BE 1 011 024 for instance, a device is described for regulation of the airflow in a ventilation device with a self-regulating valve orientably fitted in a duct of the ventilation device, which, without use of a sensor or motor, automatically regulates the airflow through the ventilation device between a maximum airflow opening and a minimum airflow opening with relation to the air pressure difference between the inlet and the outlet of the ventilation device. The self-regulating valve is equipped with an elastic soft synthetic profile, operating as a flexible suspension connection, in order to stabilize the airflow rate upon variation of the pressure differences, and said self-regulating valve with suspension connection consists of a combination of two components with at least one hard synthetic profile and an elastic soft synthetic profile.

The disadvantage of such design is that it offers too little regulability with relation to the pressure difference, which leads to unnecessary energy consumption and draught discomfort. This means that an insufficiently constant flow rate is reached at too high levels of pressure difference or that the airflow rate still varies too widely with changes in pressure difference above nominal pressure difference.

The purpose of the invention is to provide a device for regulating the airflow rate in a ventilation device according to the first part of the first claim, in which the airflow rate is regulated from a smaller pressure difference onward and the airflow rate remains nearly constant beyond this pressure difference.

This purpose of the invention is solved by providing a device for regulating the airflow rate in a ventilation device, comprising an air duct having a movable and autonomously operating valve and which automatically adjusts the airflow opening in the air duct with relation to the pressure difference between the inlet and the outlet of the air duct, the valve being rotatingly suspended around a free suspension point in the air duct, and provided in such a way that, upon rising pressure difference, the valve moves in the air duct first by rotating to a maximum turning angle around the free suspension point and subsequently by deforming without further rotating around the free suspension point.

The larger the pressure differences over the valve, the smaller the airflow openings at the height of the valve. However, regardless of the position of the valve, there always remains a minimum airflow opening.

In this way, the flow rate remains within an acceptable limit of the nominal flow rate, so that no extra energy loss occurs because of over-ventilation and no draught discomfort is experienced. By this, a high class of regulability with relation to pressure difference is reached.

In a preferred configuration of a device according to the invention, deformation of the valve takes place through bending of the valve.

Bending of the valve preferably takes place at the height of an elastic connecting part which is provided between two less elastic parts.

In a preferred configuration of a device according to the invention, at the height of the free suspension point, a protrusion is provided in the air duct, which determines the maximum turning angle of the valve.

The maximum turning angle preferably lies between 20° and 25°.

In an advantageous configuration of a device according to the invention, an element is provided in the air duct which limits bending of the valve.

The maximum bending angle lies thereby preferably between 30° and 50°.

In a preferred configuration of a device according to the invention, the above-mentioned element is an extra element which is provided into the air duct.

In another preferred embodiment of a device according to the invention, the air duct is limited by an upper profile and a lower profile, the element being part of the upper profile.

In a preferred device with relation to the invention, the valve is made of PVC.

This invention will now be further explained below by means of a detailed description of two examples of a configuration of a ventilation device with relation to the invention. The sole purpose of this description is to provide an explanatory example and to indicate further advantages and specifics of this invention. Hence, example and to indicate further advantages and specifics of this invention. Hence, this description cannot be interpreted in any way as a limitation of the field of applicability of the invention or of the patent rights claimed in this application.

In this detailed description, by means of reference numbers, reference is made to the enclosed drawings, in which:
- *Figure 1* shows a cross-profile of a non-acoustic ventilation device provided with a device with relation to the invention;
- *Figure 2* shows a cross-profile of an acoustically damping ventilation device provided with a device with relation to the invention, in which detail X shows a magnification of the placing of a valve of a device according to the invention in the ventilation device;
- *Figure 3* shows a diagram in which the flow rate (dm³/s) is recorded against the pressure difference (Pa) for a non-self-regulating ventilation grille (ventilation device without valve that automatically adjusts the airflow opening in the air duct with relation to the pressure difference between the inlet and the outlet of the air duct), for a ventilation device provided with a device with relation to the state of the art and for a device provided with a device according to the invention;
- *Figure 4* shows a diagram in which the flow rate (dm³/s) is recorded against the pressure difference (Pa) at a nominal flow rate of 20 for determination of the classes of regulability with relation to pressure difference for Belgium.

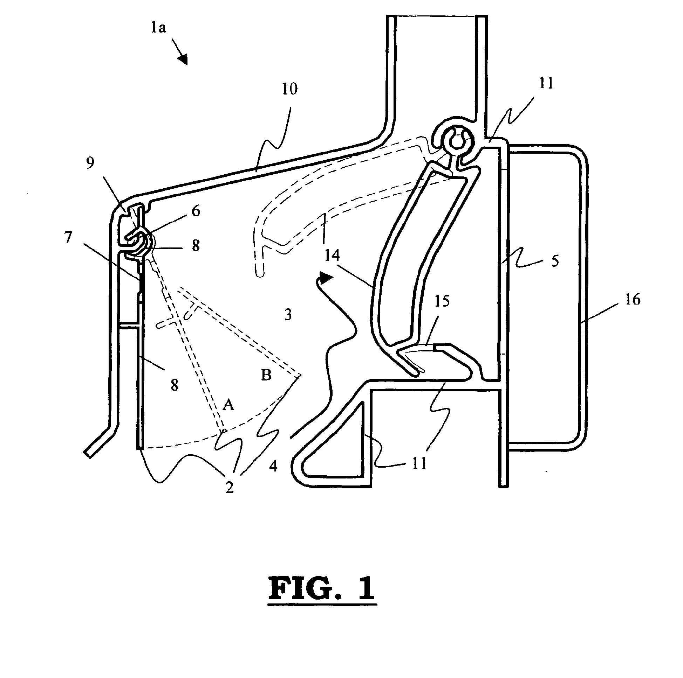

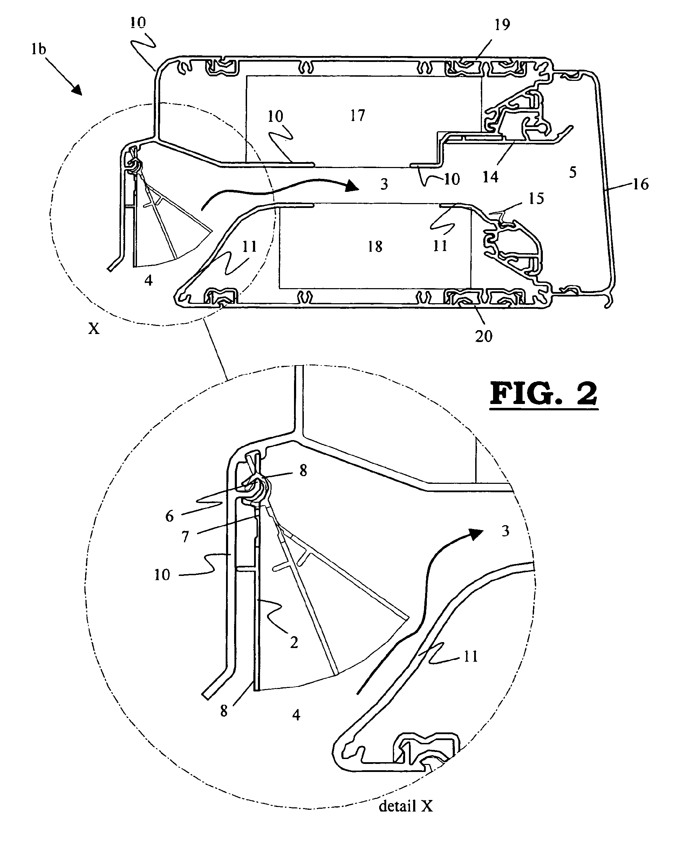

The device according to the invention for regulation of the airflow rate with relation to the pressure difference in a ventilation device, can be built in all kinds of ventilation devices, i.e. in non-acoustic ventilation devices (1a) as shown in figure 1, as well as and in acoustically damping ventilation devices (1b) as shown in figure 2.

A ventilation device (1a, 1b), as shown in figures 1 and 2, includes an air duct (3), limited by an upper profile (10) and a lower profile (11).

A device according to the invention (see detail X in figure 2) which is built in such ventilation device (1a, 1b) includes an autonomously operating valve (2), which is provided in a movable way in the air duct (3) and which automatically adjusts the airflow opening in the air duct (3) with relation to the pressure difference between the inlet (4) and the outlet (5) of the air duct (3). Such valve (2) is most often referred to as self-regulating. In addition, the valve (2) is rotatingly suspended around a free suspension point (6) in the air duct (3). In this embodiment, this free suspension point (6) is part of the upper profile (10), but it could also be a separate element.

Upon small pressure differences over the ventilation device (1a, 1b), the valve (2) first rotates around the free suspension point (6), without deformation of the valve (2), until a given maximum turning angle is reached (position A). By such rotation, the airflow opening of the air duct (3) is reduced by half at the height of the inlet (4). At the height of the free suspension point (6), a protrusion (9) determining the maximum turning angle of the valve (2) may be provided in the air duct (3). This maximum turning angle for instance lies between 20° and 25°. In this configuration, this protrusion (9) is also part of the upper profile (10), but again, it could be a separate element.

Upon larger pressure differences, deformation of the self-regulating valve (2) takes place and this without further rotation of the valve around the free suspension point (6) (position B). This deformation consists of bending of the valve (2) at the height of an elastic connection piece (7) between two less elastic, for instance harder parts (8) of the valve (2). When the valve (2) bends, the airflow opening between the valve (2) and the lower profile (11) progressively decreases to a minimum airflow opening. In the air duct (3), an element may be provided that limits bending of the valve (2) (not shown in the figure). Such element could be an extra element fitted in the air duct (3) or it could be part of the upper profile (10). The maximum bending angle could lie between for instance 30° and 50°.

The larger the rotation or bending of the self-regulating valve (2), the larger the resistance or force exerted by the self-regulating valve (2) to cancel this rotation or bending.

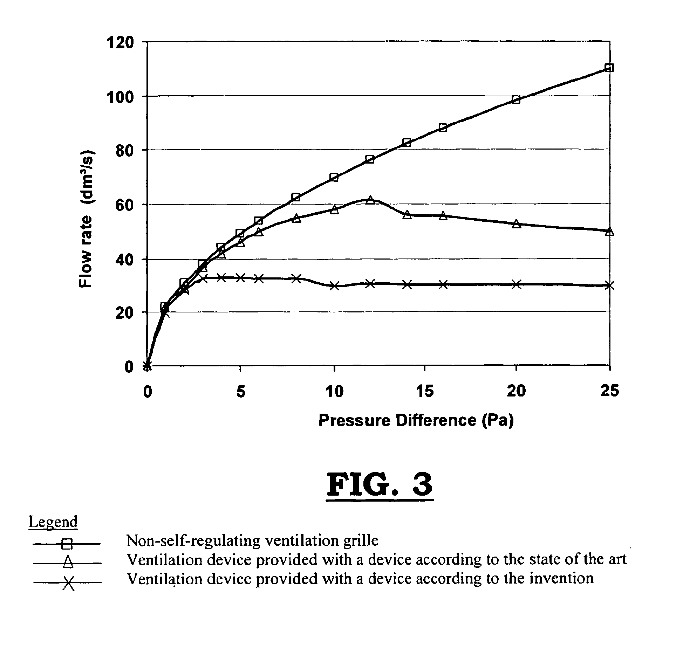

As can be deducted from figure 3, in a device not provided with a valve that automatically adjusts the airflow opening in the air duct with relation to the pressure difference between the inlet and the outlet of the air duct (also called a non-self regulating grille), the airflow rate increases upon rising pressure difference. In devices according to the state of the art which are provided with a valve that automatically adjusts the airflow opening in the air duct with relation to the pressure difference between the inlet and the outlet of the air duct, as described for instance BE 1 011 024, the airflow rate rises to ± 60 dm³/s at a pressure difference of 12 Pa and remains relatively constant thereafter. In a ventilation device provided with a device according to the invention, once a pressure difference of 2 Pa has been reached, the airflow rate remains virtually constant at 30 dm³/s within a ± 20 % limit. In addition, compared with existing devices with relation to the present art, faster operation (= at lower pressure difference) of the valve (2) of a device with relation to the invention is clearly observable.

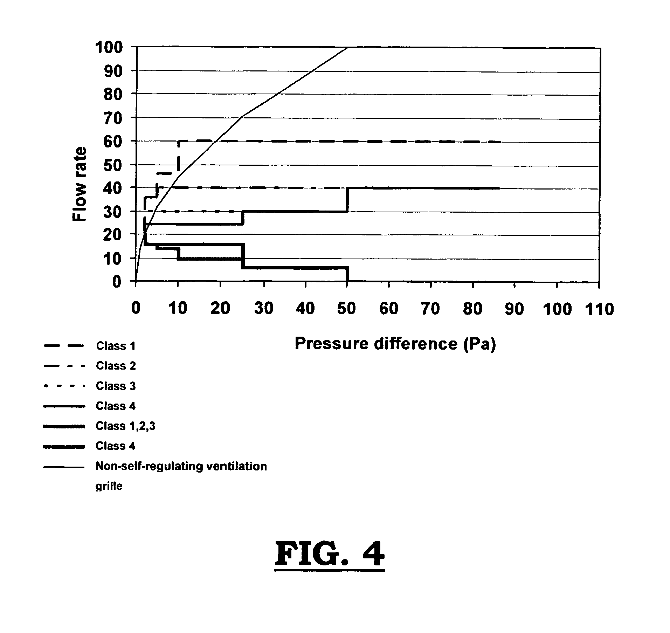

In Belgium for instance, the degree of regulability of the airflow rate with relation to the pressure difference (Pa) is determined by means of 5 classes, as indicated in a general way in table 1 and as shown in particular in figure 4 for a nominal flow rate of 20 units. The higher the class, the more constant the airflow rate at pressure differences above nominal pressure difference. The device with relation to the invention, of which the flow rate/pressure characteristics are shown in figure 3, falls under class 4, i.e. the strictest class of regulability with relation to pressure difference.

**Table 1: Belgian classification of regulability with relation to pressure difference**

| | Class P₀ | Class P₁ | Class P₂ | Class P₃ | Class P₄ |
|---|---|---|---|---|---|
| 0 ≤ P < 2 Pa | | ≥ 0.8 √(P/2) | ≥ 0.8 √(P/2) | ≥ 0.8 √(P/2) | ≥ 0.8 √(P/2) |
| | | and ≤ | and ≤ | and ≤ | and ≤ |
| | | 1.20 q_{N} | 1.20q_{N} | 1.20q_{N} | 1.20q_{N} |
| 2 | q_{N} | q_{N} | q_{N} | q_{N} | q_{N} |
| 2 < P < 5 Pa | Does not comply with class P₁ | ≥ 0.80q_{N} | ≥ 0.80q_{N} | ≥ 0.80q_{N} | ≥ 0.80q_{N} |
| | | and ≤ 1.8q_{N} | and ≤ 1.8q_{N} | and ≤ 1.5q_{N} | and ≤ 1.2q_{N} |
| 5-10 Pa | | ≥ 0.70q_{N} | ≥ 0.70q_{N} | ≥ 0.70q_{N} | ≥ 0.80q_{N} |
| | | and ≤ 2.3q_{N} | and ≤ 2.0q_{N} | and ≤ 1.5q_{N} | and ≤ 1.2q_{N} |
| 10-25 Pa | | ≥ 0.50q_{N} | ≥ 0.50q_{N} | ≥ 0.50q_{N} | ≥ 0.80q_{N} |
| | | and ≤ 3.0q_{N} | and ≤ 2.0q_{N} | and ≤ 1.5q_{N} | and ≤ 1.2q_{N} |
| 25-50 Pa | | 0.30q_{N} | ≥ 0.30q_{N} | ≥ 0.30q_{N} | ≥ 0.30q_{N} |
| | | and ≤ 3.0q_{N} | and ≤ 2.0q_{N} | and ≤ 1.5q_{N} | and ≤ 1.5q_{N} |
| 50-100 Pa | | ≤ 3.0q_{N} | ≤ 2.0q_{N} | ≤ 2.0q_{N} | ≤ 2.0q_{N} |
| 100-200 Pa | | ≤4.0q_{N} | ≤ 3.0q_{N} | ≤ 3.0q_{N} | ≤3.0q_{N} |

The valve (2) with relation to the invention is preferably made of PVC, but it could be made of any other material.

The upper and lower profiles (10, 11) are preferably made of aluminium or synthetic material. At the height of the outlet (5) of the air duct (3) a punched profile (16) is provided, which in addition can be removed for cleaning of the ventilation device.

The ventilation device (1a, 1b) which is provided with a device according to the invention, is also provided with a hingeable valve (14) in order to regulate the maximum airflow rate at a given pressure difference over the ventilation unit (1a, 1b) or to shut off the airflow completely. In addition, a sealing element (15) is provided to guarantee air tightness and water tightness of the ventilation unit. This element (15) is preferably made of a flexible synthetic or rubber material.

In a ventilation device (1a) as shown in figure 1, this hingeable valve (14) is provided in a hingeable way in the lower profile (11). It also constitutes the sealing element (15) provided in the lower profile (11).
In an acoustically damping ventilation device (1b) as shown in figure 2, this hingeable valve (14) is provided in a hingeable way in the upper profile (10) and it constitutes the sealing element (15) provided in the lower profile. However, in this configuration, the hingeable valve (14) could also be provided in a hingeable way in the lower profile (11).

In an acoustically damping ventilation device (1b) as shown in figure 2, the air duct (3) is limited by acoustic insulation material. In the configuration shown in figure 2, this insulation material is provided at the upper side and at the lower side of the air duct (3). Subject to the required amount of insulation material, the length of the upper profile (10) and the lower profile (11) could be adjusted.

In addition, the upper and lower profiles (10, 11) are each provided with a thermal break (19, respectively 20) to limit heat losses. These thermal breaks (19, 20) are preferably made of synthetic material.

Such ventilation devices (1a, 1b), provided with a device according to the invention, can be installed on or underneath the glass pane of a window or a door, on the window profile or in the wall.

## Claims

1. A device for regulating the airflow rate in a ventilation device (1a, 1b), comprising an air duct having a movable and autonomously operating valve (2) and which automatically adjusts the airflow opening with relation to the pressure difference between the inlet (4) and the outlet (5) of the air duct (3), **characterized in that** the valve (2) is rotatingly suspended around a free suspension point (6) in the air duct (3), and provided in such a way that, upon rising pressure difference, the valve (2) moves in the air duct (3) first by rotating to a maximum turning angle around the free suspension point (6) and subsequently by deforming, without further rotation around the free suspension point (6).

2. A device with relation to claim 1, **characterized in that** deformation of the valve (2) takes place through bending of the valve (2).

3. A device with relation to claim 2, **characterized in that** the bending of the valve (2) takes place at the height of an elastic connection part (7) which is provided between two less elastic parts (8).

4. A device with relation to one of the claims 1 to 3, **characterized in that**, at the height of the free suspension point (6), a protrusion (9) is provided in the air duct (3), which determines the maximum turning angle of the valve (2).

5. A device with relation to one of the claims 1 to 4, **characterized in that** the maximum turning angle lies between 20° and 25°.

6. A device with relation to one of the claims 1 to 5, **characterized in that** an element is provided in the air duct (3) which limits bending of the valve (2).

7. A device with relation to claim 6, **characterized in that** the maximum bending angle lies between 30° and 50°.

8. A device with relation to claim 6 or 7, **characterized in that** the element is an extra element which is provided into the air duct (3).

9. A device with relation to claim 6 or 7, **characterized in that** the air duct (3) is limited by an upper profile and a lower profile (10, 11), the element being part of the upper profile (10).

10. A device with relation to one of the claims 1 to 9, **characterized in that** the valve (2) is made of PVC.

## Patentansprüche

1. Vorrichtung zur Regelung des Luftdurchsatzes in einer Lüftungsanlage (1a, 1b), umfassend einen Luftkanal mit einer beweglichen und unabhängig arbeitenden Klappe (2), durch welche die Luftstromöffnung automatisch, in Abhängigkeit von der Druckdifferenz zwischen der Eintrittsöffnung (4) und der Austrittsöffnung (5) des Luftkanals (3), eingestellt wird, **dadurch gekennzeichnet, dass** die Klappe (2) drehbar um einen freien Aufhängungspunkt (6) im Luftkanal (3) aufgehängt und in einer Weise vorgesehen ist, dass sich die Klappe (2) bei einem Anstieg der Druckdifferenz in dem Luftkanal (3) bewegt, indem sie sich zunächst bis zu einem maximalen Drehwinkel um den freien Aufhängungspunkt (6) dreht und sich anschließend, ohne weitere Drehung um den freien Aufhängungspunkt (6), verformt.

2. Vorrichtung nach Anspruch 1, **dadurch gekennzeichnet, dass** die Verformung der Klappe (2) durch ein Verbiegen der Klappe (2) erfolgt.

3. Vorrichtung nach Anspruch 2, **dadurch gekennzeichnet, dass** das Verbiegen der Klappe (2) auf der Höhe eines elastischen Verbindungsteils (7) erfolgt, welches zwischen zwei weniger elastischen Teilen (8) vorgesehen ist.

4. Vorrichtung nach einem der Ansprüche 1 bis 3, **dadurch gekennzeichnet, dass** auf der Höhe des freien Aufhängungspunktes (6) ein Vorsprung (9) in dem Luftkanal (3) vorgesehen ist, durch welchen der maximale Drehwinkel der Klappe (2) bestimmt wird.

5. Vorrichtung nach einem der Ansprüche 1 bis 4, **dadurch gekennzeichnet, dass** der maximale Drehwinkel zwischen 20° und 25° liegt.

6. Vorrichtung nach einem der Ansprüche 1 bis 5, **dadurch gekennzeichnet, dass** in dem Luftkanal (3) ein Element vorgesehen ist, durch welches das Verbiegen der Klappe (2) begrenzt wird.

7. Vorrichtung nach Anspruch 6, **dadurch gekennzeichnet, dass** der maximale Biegewinkel zwischen 30° und 50° liegt.

8. Vorrichtung nach Anspruch 6 oder 7, **dadurch gekennzeichnet, dass** das Element ein separates Element ist, welches in dem Luftkanal angeordnet wurde.

9. Vorrichtung nach Anspruch 6 oder 7, **dadurch gekennzeichnet, dass** der Luftkanal (3) durch ein oberes Profil und ein unteres Profil (10, 11) begrenzt ist, wobei das Element einen Teil des oberen Profils (10) bildet.

10. Vorrichtung nach einem der Ansprüche 1 bis 9, **dadurch gekennzeichnet, dass** die Klappe (2) aus PVC besteht.

## Revendications

1. Dispositif de régulation du débit d'air dans un dispositif de ventilation (1a, 1b), comprenant un conduit d'air équipé d'un clapet mobile à commande autonome (2) qui règle automatiquement l'ouverture d'écoulement d'air dans le conduit d'air en fonction de la différence de pression entre l'entrée (4) et la sortie (5) du conduit d'air (3), **caractérisé en ce que** le clapet (2) est suspendu de façon rotative autour d'un point de suspension libre (6) dans le conduit d'air (3), et est conçu de telle sorte que, lorsque la différence de pression augmente, le clapet (2) se déplace dans le conduit d'air (3) d'abord en tournant suivant un angle de rotation maximum autour du point de suspension libre (6), et ensuite en se déformant sans rotation supplémentaire autour du point de suspension libre (6).

2. Dispositif selon la revendication 1, **caractérisé en ce que** la déformation du clapet (2) se produit sous la forme d'une courbure du clapet (2).

3. Dispositif selon la revendication 2, **caractérisé en ce que** la courbure du clapet (2) se produit à hauteur d'une partie de connexion élastique (7) située entre deux parties moins élastiques (8).

4. Dispositif selon l'une quelconque des revendications 1 à 3, **caractérisé en ce que** à hauteur du point de suspension libre (6), une saillie (9) est prévue dans le conduit d'air (3) pour déterminer l'angle de rotation maximum du clapet (2).

5. Dispositif selon l'une quelconque des revendications 1 à 4, **caractérisé en ce que** l'angle de rotation maximum est compris entre 20° et 25°.

6. Dispositif selon l'une quelconque des revendications 1 à 5, **caractérisé en ce qu'**un élément est prévu dans le conduit d'air (3) pour limiter la courbure du clapet (2).

7. Dispositif selon la revendication 6, **caractérisé en ce que** l'angle de courbure maximum est compris entre 30° et 50°.

8. Dispositif selon la revendication 6 ou 7, **caractérisé en ce que** l'élément est un élément supplémentaire qui est prévu dans le conduit d'air (3).

9. Dispositif selon la revendication 6 ou 7, **caractérisé en ce que** le conduit d'air (3) est limité par un profilé supérieur et un profilé inférieur (10, 11), l'élément faisant partie du profilé supérieur (10).

10. Dispositif selon l'une quelconque des revendications 1 à 9, **caractérisé en ce que** le clapet (2) est constitué de PVC.
